# EUROPÄISCHE PATENTSCHRIFT

(11) **EP 1 764 277 B1**
(45) Veröffentlichungstag und Bekanntmachung des Hinweises auf die Patenterteilung: **02.07.2008**
(21) Anmeldenummer: 06118764.7
(22) Anmeldetag: 10.08.2006
(51) Int. Cl.: B60W 30/14

(54) **Verfahren und Vorrichtung zur Geschwindigkeitsregelung eines Kraftfahrzeuges**
Speed control method and device for a motor vehicle
Procédé et dispositif de régulation de vitesse pour véhicule automobile

(30) Priorität: 16.09.2005 DE 102005044271
(43) Veröffentlichungstag der Anmeldung: 21.03.2007
(73) Patentinhaber: ROBERT BOSCH GMBH, 70442 Stuttgart (DE)
(72) Erfinder: Kaller, Jochen, Kanagawa-ken 225-0016 (JP); John, Dirk, 71272 Renningen (DE)

(56) Entgegenhaltungen:
- DE-A1- 10 327 255
- FR-A- 2 843 342
- FR-A- 2 852 559
- FR-A1- 2 849 411
- US-A- 6 134 499
- US-A1- 2004 204 799

## Beschreibung

Die Erfindung betrifft ein Verfahren und eine Vorrichtung zur Geschwindigkeitsregelung eines Kraftfahrzeuges mit einem Geschwindigkeitsregler, mittels dessen eine Soll-Geschwindigkeit für das Kraftfahrzeug einstellbar ist, mit einem Bedienfeld, mittels dessen die Soll-Geschwindigkeit für den Geschwindigkeitsregler vorgebbar ist, einer Bestimmungseinrichtung, mittels der eine Geschwindigkeitsbegrenzung feststellbar ist und mit einem Raddrehzahlsensor zur Erfassung von Werten, die eine Ist-Geschwindigkeit repräsentieren, wobei in einem Speicher des Reglers die Soll-Geschwindigkeit repräsentierenden Werte, die Geschwindigkeitsbegrenzung repräsentierenden Werte und die die Ist-Geschwindigkeit repräsentierenden Werte abspeicherbar sind und mittels des Reglers die Soll-Geschwindigkeit an die Geschwindigkeitsbegrenzung anpassbar ist und ein Verfahren und eine Vorrichtung zur Geschwindigkeitsregelung eines Kraftfahrzeugs mit einem Geschwindigkeitsregler und mit einem Raddrehzahlsensor zur Erfassung von Werten, die eine Ist-Geschwindigkeit repräsentieren, mit denen in dem Geschwindigkeitsregler eine Ist-Beschleunigung ermittelbar ist, wobei in einem Speicher des Geschwindigkeitsreglers eine Beschleunigungsbegrenzung repräsentierende Werte und die die Ist-Beschleunigung repräsentierenden Werte abspeicherbar sind.

Aus Bosch, adaptive Fahrgeschwindigkeitsregelung, ISBN 3-7782-2034-9, Ausgabe 2002 ist bekannt, dass die adaptive Fahrgeschwindigkeitsregelung die Geschwindigkeitsregelung des Fahrzeugs in der Weise übernimmt, dass eine Soll-Geschwindigkeit eingeregelt wird, solange die Umgebungsbedingungen dies zulassen.

Die englische Übersetzung der adaptiven Fahrgeschwindigkeitsregelung lautet adaptive cruise control, abgekürzt ACC. Die Fahrgeschwindigkeit wird im Wesentlichen reduziert, wenn sich ein langsameres Fahrzeug vor dem eigenen Fahrzeug befindet, bei Kurvenfahrt oder, wenn entsprechende Informationen zur Verfügung stehen, bei Geschwindigkeitsbeschränkungen, auch als Geschwindigkeitsbegrenzungen bezeichnet. Wird eine zu geringe Geschwindigkeit eingeregelt oder verzögert das Fahrzeug zu stark, so hat der Fahrer die Möglichkeit, durch Betätigung des Gaspedals, auch als Übertreten bezeichnet, die aktuelle Geschwindigkeit beziehungsweise Beschleunigung zu erhöhen.

Die Geschwindigkeits- und Beschleunigungsgrenzen der adaptiven Fahrgeschwindigkeitsregelung werden so appliziert, dass dem Fahrer ein komfortables Verhalten des Fahrzeugs geboten wird. Tatsächlich empfindet jeder Fahrer den Komfort eines Geschwindigkeitsreglers sehr unterschiedlich. Beschleunigt das Fahrzeug zu wenig oder regelt zu geringe Geschwindigkeiten ein, so hat der Fahrer zwar die Möglichkeit, durch Übertreten die Beschleunigung und Geschwindigkeit zu erhöhen, dass Fahrzeug wird jedoch die vom Geschwindigkeitsregler vorgegebenen Grenzen wieder einregeln, sobald der Fahrer das Gaspedal nicht mehr betätigt. Eine Beschleunigungsgrenze, auch als Beschleunigungsbegrenzung, als zulässige Beschleunigung oder als Maximalbeschleunigung des Systems bezeichnet, ist in der DE 100 15 299 A1 beschrieben.

US 6 134 499 A wird auf besten Stand der Technik angesehen und dient als Basis der Ansprüchen 1, 6, 7, 12.

Der Erfindung liegt daher die Aufgabe zugrunde, eine von einem Geschwindigkeitsregler vorgegebene Geschwindigkeit an die Wunschgeschwindigkeit oder eine vom dem Geschwindigkeitsregler vorgebbare Beschleunigung an die Wunschbeschleunigung eines Fahrers anzupassen.

Diese Erfindung wird mit den Merkmalen der nebengeordneten Ansprüche gelöst. Erfindungsgemäß sind bezüglich der Wunschgeschwindigkeit bei aktiviertem Geschwindigkeitsregler und einer Soll-Geschwindigkeit, die einer Geschwindigkeitsbegrenzung entspricht, während einer vorgebbaren Zeitdauer mehrere aufeinander folgende Werte erfassbar, die eine Ist-Geschwindigkeit repräsentieren, die die Ist-Geschwindigkeit repräsentierenden Werte und die die Soll-Geschwindigkeit repräsentierenden Werte in dem Geschwindigkeitsregler miteinander vergleichbar und in dem Speicher die die Soll-Geschwindigkeit repräsentierenden Werte durch Werte, die eine Geschwindigkeit oberhalb der Soll-Geschwindigkeit repräsentieren, dann ersetzbar, wenn die die Ist-Geschwindigkeit repräsentierenden Werte um eine vorgebbare Differenz größer als die die Soll-Geschwindigkeit repräsentierenden Werte sind und bezüglich der Wunschbeschleunigung sind bei aktiviertem Geschwindigkeitsregler und einer Beschleunigungsbegrenzung während einer vorgebbaren Zeitdauer mehrere aufeinander folgende Werte erfassbar, die eine Ist-Geschwindigkeit repräsentieren und daraus in dem Geschwindigkeitsregler Werte ermittelbar, die eine Ist-Beschleunigung repräsentieren, die die Ist-Beschleunigung repräsentierende Werte und die die Beschleunigungsbegrenzung repräsentierenden Werte in dem Geschwindigkeitsregler vergleichbar, und in dem Speicher die die Beschleunigungsbegrenzung repräsentierenden Werte durch Werte, die eine Beschleunigung oberhalb der Beschleunigungsbegrenzung repräsentieren, dann ersetzbar, wenn die die Ist-Beschleunigung repräsentierenden Werte um eine vorgebbare Differenz größer als die die Beschleunigungsbegrenzung repräsentierenden Werte sind.

Dabei wird in verschiedenen Situationen die Tatsache genutzt, dass der Fahrer durch Übertreten anzeigt, dass die von dem Geschwindigkeitsregler, besser Abstands- und Fahrgeschwindigkeitsregler, vorgegebenen Geschwindigkeits- und Beschleunigungsgrenzen zu gering sind. Außerdem können die beim Aktivieren des Reglers anliegende Fahrzeuggeschwindigkeit oder -beschleunigung Hinweise darauf geben, welches Fahrverhalten der Fahrer wünscht. In solchen Situationen erhöht der Regler mit Anpassung an die Wunschgeschwindigkeit des Fahrers die Grenzen und erzeugt somit ein Längsregelungsverhalten, welches dem Wunsch des Fahrers mehr entspricht. Dies kann in allen Situationen geschehen, in denen Beschleunigung oder Geschwindigkeit von dem Regler aus Komfortgründen begrenzt werden und der Fahrer nicht zur Vermeidung von Gefahrensituationen übertritt. Im Wesentlichen betrifft dies eine Geschwindigkeitsregelung bei Kurvenfahrt und eine Geschwindigkeitsregelung bei Geschwindigkeitsbegrenzungen.

Da zu hohe Querbeschleunigungskräfte von allen Fahrzeuginsassen als unangenehm empfunden werden, begrenzt der Regler die Geschwindigkeit bei Kurvenfahrt auf eine maximal zulässige Querbeschleunigung. Erzeugt der Fahrer durch Übertreten eine höhere als von dem Regler zugelassene Querbeschleunigung, so kann davon ausgegangen werden, dass diese Querbeschleunigung von diesem Fahrer noch als angenehm empfunden wird. Daher wird auch nach Ende des Übertretens eine maximale Querbeschleunigung als Obergrenze verwendet, die der vom Fahrer manuell erzeugten Querbeschleunigung entspricht. Selbiges gilt, wenn der Fahrer den Regler während einer Kurvenfahrt aktiviert und in dieser Kurve bereits eine größere Querbeschleunigung erzeugt hat, als der Regler zulassen würde. Die Erhöhung der Querbeschleunigungsgrenze kann optional nur für momentan gefahrene Kurve oder aber für den kompletten Fahrzyklus gelten. Soll die Grenze auch für weitere Fahrzyklen verwendet werden, so ist sicherzustellen, dass das Fahrzeug mit einer Fahrererkennung ausgestattet ist, um zu vermeiden, dass bei einem Fahrerwechsel zu hohe Querbeschleunigungsgrenzen eingestellt werden.

Beinhaltet der Regler die Funktionalität, die Fahrgeschwindigkeit bei Geschwindigkeitsbegrenzungen herunterzuregeln, so kann ein aktives Übertreten des Fahrers ebenfalls genutzt werden, um einen höheren Geschwindigkeitswunsch zu erkennen. In diesem Fall ist sicherzustellen, dass das Übertreten des Fahrers nicht nur aufgrund einer kurzfristigen Aktion stattgefunden hat. Aus diesem Grund soll die Wunschgeschwindigkeit allmählich in Abhängigkeit von der Dauer des Übertretens erhöht werden. Auch bei Aktivierung des Reglers innerhalb einer Geschwindigkeitsbegrenzung und bei einer Fahrzeuggeschwindigkeit oberhalb dieser Begrenzung soll die Wunschgeschwindigkeit nur bei längerer Betätigung des Gaspedals nach Aktivierung allmählich erhöht werden. Die Erhöhung der Wunschgeschwindigkeit kann optional nur für die aktuelle Geschwindigkeitsbegrenzung gültig sein oder auf den kompletten Fahrzyklus ausgedehnt werden.

Aktiviert ein Fahrer den Regler in Freifahrt, also während sich kein Objekt vor dem eigenen Fahrzeug befindet und während stärker beschleunigt wird, als die Maximalbeschleunigung des Systems, so kann davon ausgegangen werden, dass die Wunschgeschwindigkeit mit dieser Beschleunigung erreicht werden soll. Daher soll die Beschleunigungsgrenze bis zum Erreichen der Wunschgeschwindigkeit auf den aktuellen Wert gesetzt werden. Eine generelle Erhöhung der Maximalbeschleunigung ist nicht sinnvoll, da es sich in diesem Fall um eine einmalige Situation handelt.

Eine Erhöhung der Maximalbeschleunigung bei einem aktivierten Regler erfolgt nur dann, wenn der Fahrer durch ständiges Übertreten aufzeigt, dass ihm die vom System gegebene Maximalbeschleunigung nicht ausreichend ist. Dazu wird in Abhängigkeit von der Gesamtdauer in der im aktuellen Fahrzyklus übertreten wurde, die Maximalbeschleunigung erhöht. Die Erhöhung der Maximalbeschleunigung gilt für den aktuellen Fahrzyklus oder kann unter Berücksichtigung einer Fahrererkennung auf weitere Fahrzyklen ausgedehnt werden. Dabei ist zu berücksichtigen, dass bei einer Geschwindigkeitserhöhung nicht gleich mit der Maximalbeschleunigung des Systems beschleunigt wird, sondern aus Komfortgründen die Beschleunigung erst allmählich bis zur Maximalbeschleunigung des Systems angehoben wird. Übertritt der Fahrer schon vor Erreichen der Maximalbeschleunigung des Systems, so wird auch dieses Übertreten genutzt, um die Maximalbeschleunigung des Systems anzuheben.

Zum besseren Verständnis der Erfindung werden nachstehend Ausführungsbeispiele anhand der Zeichnung näher erläutert.

### Es zeigen

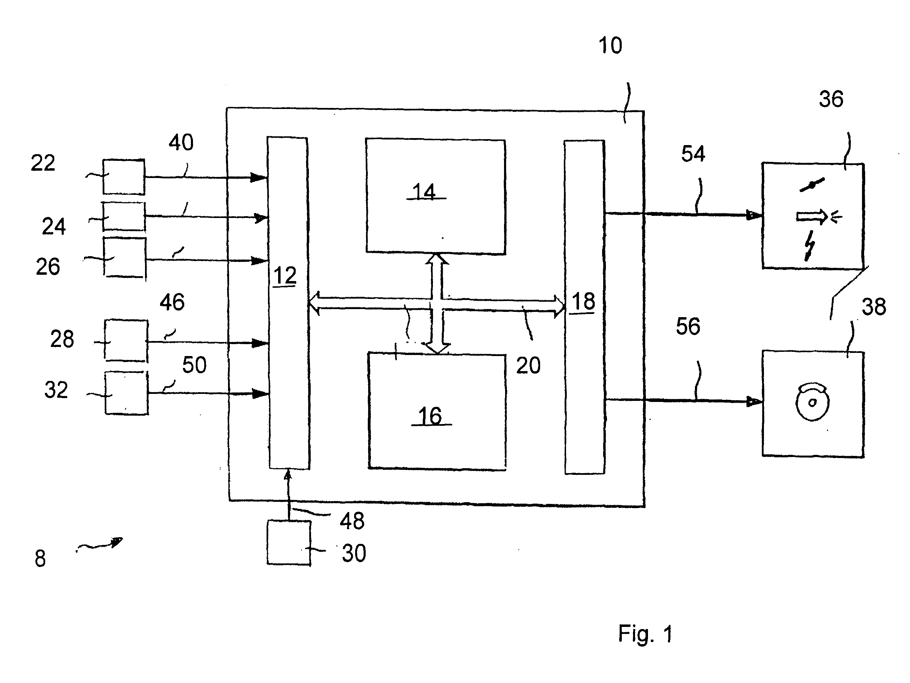

Fig. 1 ein Blockschaltbild einer Vorrichtung mit einem Abstands- und Geschwindigkeitsregler, zwei Bestimmungseinrichtungen als Mittel zur Erkennung von Geschwindigkeitsbegrenzungen, einem Raddrehzahlsensor und einem Bedienfeld und

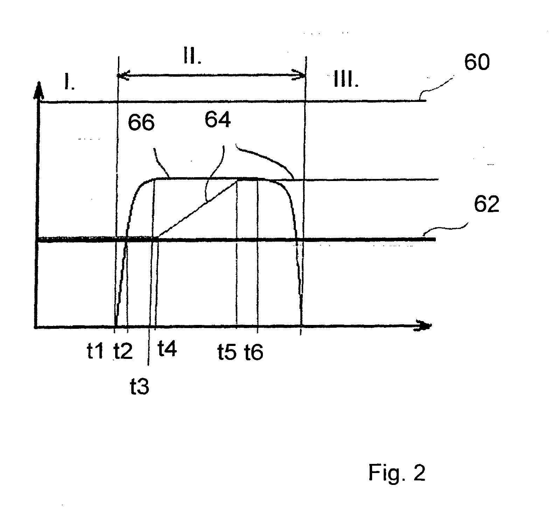

Fig. 2 ein Diagramm mit einem Graphen für eine Soll-Geschwindigkeit, die über das Bedienfeld eingebbar ist, einen zweiten Graphen für eine zweite Soll-Geschwindigkeit, die einer Geschwindigkeitsbegrenzung entspricht, einen dritten Graphen für eine nachgeregelte Soll-Geschwindigkeit und einen vierten Graphen für ein Übertreten aufgetragen über die Zeit für ein Kraftfahrzeug bei aktiviertem Geschwindigkeitsregler.

Figur 1 zeigt eine Vorrichtung 8 mit einem adaptiven Abstands- und Fahrgeschwindigkeitsregler 10. Der Abstands- und Fahrgeschwindigkeitsregler 10 umfasst eine Eingangsschaltung 12, wenigstens einen Mikroprozessor 14, einen Speicher 16 und eine Ausgangsschaltung 18. Diese Elemente sind über ein Kommunikationssystem 20, auch als CAN-BUS bezeichnet, zum Daten- und Informationsaustausch miteinander verbunden. Die Vorrichtung 8 weist des Weiteren einen Raddrehzahlsensor 22 zur Erfassung der Raddrehzahl, einen Motordrehzahlsensor 24 zur Erfassung der Motordrehzahl, eine Bestimmungseinrichtung 26 zum Bestimmen von Querbeschleunigungskräften, eine Bestimmungseinrichtung 28 zur Bestimmung der aktuellen Position als Teil eines globalen Positionsbestimmungssystems, englisch als global positioning system, abgekürzt als GPS bezeichnet, ein Bedienfeld 30 unter anderem zur Eingabe einer Soll-Geschwindigkeit, eine Abstandsmesseinrichtung 32 zur Erfassung eines vorausfahrenden Kraftfahrzeuges, eine Stelleinrichtung 36 zur Beeinflussung einer Leistung einer Antriebseinheit des Fahrzeugs und ein Stellelement 38 zur Beeinflussung der Bremsen des Kraftfahrzeugs auf. Der Eingangsschaltung 12 sind eine elektrisch leitfähige Eingangsleitung 40 von dem Raddrehzahlsensor 22 zur Erfassung der Raddrehzahl, eine Eingangsleitung 42 von dem Drehzahlsensor 24 zur Erfassung der Motordrehzahl, eine Eingangsleitung 44 von der Bestimmungseinrichtung 26 zur Erfassung von Querbeschleunigungskräften und eine Leitung 46 von der Bestimmungseinrichtung 28 zur Erfassung von Nachrichten über Geschwindigkeitsbegrenzungen zugeführt. Des Weiteren sind der Eingangsschaltung 12 eine Leitung 48 von wenigstens dem vom Fahrer betätigbaren Bedienfeld 30 zur Vorgabe des Betriebszustandes des Fahrgeschwindigkeitsreglers 10 und des Sollabstandes und eine Eingangsleitung 50 von der Abstandsmesseinrichtung 32, vorzugsweise einem Radargerät, zugeführt. Mittels des Bedienfeldes 30 ist eine Soll-Geschwindigkeit vorgebbar, die auch als Reisegeschwindigkeit oder als gesetzte Geschwindigkeit bezeichnet ist. Der Mikroprozessor 14 bestimmt aus den von dem Sensor 22 gelieferten Drehzahlwerten eine aktuell gefahrene Geschwindigkeit, auch als Ist-Geschwindigkeit oder als tatsächlich gefahrene Geschwindigkeit bezeichnet, und aktuelle Beschleunigungswerte. Der Geschwindigkeitsregler 10, dort der wenigstens eine Mikroprozessor 14, beeinflusst im Rahmen der adaptiven Fahrgeschwindigkeitsregelung über wenigstens eine Ausgangsleitung 54 und entsprechende Stelleinrichtungen 36, auch als elektronisches Motorsteuergerät bezeichnet, die Leistung der Antriebseinheit des Fahrzeugs. Ferner beeinflusst der Geschwindigkeitsregler 10 als Steuereinheit über eine Ausgangsleitung 56 und entsprechenden Stellelementen 38, auch als Bremseinrichtung mit Elementen eines Antiblockiersystems und Antriebsschlupfsystems bezeichnet, die Bremskraft an den Radbremsen des Fahrzeugs. Der Regler 10 regelt die Ist-Geschwindigkeit nach, so dass immer die Soll-Geschwindigkeit gefahren wird.

Vorausgesetzt wird nunmehr, dass der Regler 10 aktiviert ist, eine Soll-Geschwindigkeit über das Bedienfeld in den Regler eingeben worden ist und diese Soll-Geschwindigkeit von dem Fahrzeug als Ist-Geschwindigkeit gefahren wird. Mittels der GPS-Bestimmungseinrichtung 28 ist feststellbar, ob auf der aktuell befahrenen Straße eine Geschwindigkeitsbegrenzung eingehalten werden muss. Diese Nachricht ist mittels elektrischer Signale an den Mikroprozessor lieferbar, der die Geschwindigkeitsbegrenzung repräsentierenden Werte in seinen Speicher 16 ablegt und die Soll-Geschwindigkeit repräsentierenden Werte und die die Geschwindigkeitsbegrenzung repräsentierenden Werte miteinander vergleicht. Sind die die Soll-Geschwindigkeit repräsentierenden Werte größer als die die Geschwindigkeitsbegrenzung repräsentierenden Werte, so werden die die Soll-Geschwindigkeit repräsentierenden Werte durch die die Geschwindigkeitsbegrenzung repräsentierenden Werte ersetzt und das Fahrzeugs entsprechend gedrosselt. Eine weitere Geschwindigkeitsbegrenzung ist mittels der Bestimmungseinrichtung 26 feststellbar. Mittels der Bestimmungseinrichtung 26 zur Bestimmung von Querbeschleunigungskräften ist eine während einer Kurvenfahrt des Fahrzeugs auftretende Querbeschleunigung bestimmbar. Diese wird mit einem in dem Speicher 16 abgelegten Wert verglichen und bei zu hohen Querbeschleunigungskräften wird die Geschwindigkeit des Fahrzeugs heruntergeregelt und diese Geschwindigkeitsbegrenzung eingehalten. In dem Raddrehzahlsensor 22 werden Werte ermittelt, die die Ist-Geschwindigkeit des Kraftfahrzeuges repräsentieren. Diese Werte werden in dem Speicher 16 abgelegt und mit den Werten verglichen, die die Soll-Geschwindigkeit und damit die Geschwindigkeitsbegrenzung repräsentieren. Sind die die Ist-Geschwindigkeit und damit eine Wunschgeschwindigkeit des Fahrers repräsentierenden Werte größer als die die Soll-Geschwindigkeit repräsentierenden Werte, so werden die die Soll-Geschwindigkeit repräsentierenden Werte zeitabhängig und schrittweise angehoben bis maximal auf die die die Ist-Geschwindigkeit repräsentierenden Werte und die Ist-Geschwindigkeit wird entsprechend nachgeregelt, die Geschwindigkeit wird erhöht. Vorausgesetzt werden dabei ein ständiges Übertreten oder ein Übertreten in der Größenordnung von 1-3 Minuten und eine Geschwindigkeitsdifferenz in einem Bereich von mindestens 5 km/h. Die Nachregelung soll allerdings in vorteilhafter Weise zeitabhängig erfolgen.

Übertritt ein Fahrer bei aktiviertem Regler während einer Beschleunigungsphase oder wird der Regler während einer Beschleunigungsphase aktiviert, so werden mittels des Raddrehzahlsensors 22 und des Prozessors 14 Werte ermittelt, die eine Ist-Beschleunigung repräsentieren. Diese die Ist-Beschleunigung repräsentierenden Werte werden mit Werten verglichen, die im Speicher abgelegt sind und eine zulässige Beschleunigung repräsentieren. Sind die die Ist-Beschleunigung repräsentierenden Werte größer als die eine zulässige Beschleunigung repräsentierenden Werte, so ersetzen Werte, die eine Beschleunigung oberhalb der zulässigen Beschleunigung repräsentieren, die die zulässige Beschleunigung repräsentierenden Werte, das Fahrzeug wird entsprechend nachgeregelt. Das Ersetzen der Werte kann von mehreren Umständen abhängig gemacht werden. Einerseits muss der Fahrer zumindest zwei- oder dreimal übertreten, um die Werte zu ersetzen. Andererseits müssen die Werte, die das Übertreten repräsentieren, in der gleichen Größenordnung liegen. Die Dauer des Übertretens wird dabei mit 1-3 Minuten angenommen. Die die zulässige Beschleunigung repräsentierenden Werte werden schrittweise bis maximal auf die Ist-Beschleunigung repräsentierenden Werte angehoben.

Figur 2 zeigt ein Geschwindigkeits-/ Zeit-Diagramm mit einem Graphen 60 für eine erste Soll-Geschwindigkeit, einen Graphen 62 für eine zweite Soll-Geschwindigkeit, einen Graphen 64 für eine dritte nachgeregelte Soll-Geschwindigkeit und einen Graphen 66 für ein Übertreten aufgetragen über die Zeit für ein Kraftfahrzeug bei aktivierter Geschwindigkeitsregelung. Der Graph 60 zeigt die erste Soll-Geschwindigkeit an, die der Fahrer für das Kraftfahrzeug eingestellt hat beziehungsweise über das Bedienfeld 30 in den Regler 10 eingegeben hat. Der Graph 62 zeigt die zweite Soll-Geschwindigkeit an, die einer Geschwindigkeitsbegrenzung entspricht. Der dritte Graph 64 zeigt die nachgeregelte Soll-Geschwindigkeit an, die an einen Fahrer angepasst ist. Der Graph 66 zeigt das Übertreten des Fahrers an. In einem ersten Bereich I entspricht die tatsächlich gefahrene Geschwindigkeit, auch als Ist-Geschwindigkeit bezeichnet, der zweiten Soll-Geschwindigkeit 62 und damit einer Geschwindigkeitsbegrenzung. Zum Zeitpunkt t1 tritt der Fahrer auf das Gaspedal und zum Zeitpunkt t2 entspricht die Gaspedalstellung der Geschwindigkeitsbegrenzung. Zwischen Zeitpunkten t2 und t3 wird die Gaspedalstellung weiterhin verändert, also weiter niedergetreten und zwischen Zeitpunkten t3 und t6 wird das Gaspedal in einer niedergetretenen Stellung gehalten. Zwischen Zeitpunkten t2 und t6 entspricht der Graph 66 nicht nur der Gaspedalstellung, sondern auch der tatsächlich gefahrenen Geschwindigkeit.

Zeitverzögert regelt der Regler 10 ab einem Zeitpunkt t4 die Geschwindigkeit nach bis zu einem Zeitpunkt t5 Wunschgeschwindigkeit und tatsächlich gefahrene Geschwindigkeit übereinstimmen. Ein Wert für die Wunschgeschwindigkeit ist in dem Speicher 16 ablegbar und die Wunschgeschwindigkeit wird beibehalten, obwohl der Fahrer zum Zeitpunkt t6 den Fuß vom Gaspedal nimmt. Die tatsächliche Geschwindigkeit ist allmählich von der erlaubten Höchstgeschwindigkeit auf die vom Fahrer durch Übertreten erzeugte Wunschgeschwindigkeit erhöht. In einem zweiten Bereich II wird die zweite Soll-Geschwindigkeit während des Übertretens nachgeregelt und in einem dritten Bereich III wird mit einer Wunschgeschwindigkeit des Fahrers gefahren.

## Patentansprüche

1. Verfahren zur Geschwindigkeitsregelung eines Kraftfahrzeuges mit einem Geschwindigkeitsregler (10), mittels dessen eine Soll-Geschwindigkeit (60, 62) für das Kraftfahrzeug einstellbar ist, mit einem Bedienfeld (30), mittels dessen die Soll-Geschwindigkeit (60) für den Geschwindigkeitsregler (10) vorgebbar ist, einer Bestimmungseinrichtung (26, 28), mittels der eine Geschwindigkeitsbegrenzung (62) feststellbar ist und mit einem Raddrehzahlsensor (22) zur Erfassung von Werten, die eine Ist-Geschwindigkeit (62, 64, 66) repräsentieren, wobei in einem Speicher (16) des Geschwindigkeitsreglers (10) die Soll-Geschwindigkeit (60, 62) repräsentierenden Werte, die Geschwindigkeitsbegrenzung (62) repräsentierenden Werte und die die Ist-Geschwindigkeit (62, 64, 66) repräsentierenden Werte abspeicherbar sind und mittels des Reglers (10) die Soll-Geschwindigkeit (60) an die Geschwindigkeitsbegrenzung (62) anpassbar ist, mit folgenden Verfahrensschritten:
- bei aktiviertem Geschwindigkeitsregler (10) und einer Soll-Geschwindigkeit (62), die einer Geschwindigkeitsbegrenzung (62) entspricht, werden während einer vorgebbaren Zeitdauer mehrere aufeinander folgende Werte erfasst, die eine Ist-Geschwindigkeit (66) repräsentieren,
- die die Ist-Geschwindigkeit (66) repräsentierenden Werte und die die Soll-Geschwindigkeit (62) repräsentierenden Werte werden miteinander verglichen,
- sind die die Ist-Geschwindigkeit (66) repräsentierenden Werte um eine vorgebbare Differenz größer als die die Soll-Geschwindigkeit (62) repräsentierenden Werte, werden die die Soll-Geschwindigkeit (62) repräsentierenden Werte durch Werte ersetzt, die eine Geschwindigkeit oberhalb der Soll-Geschwindigkeit (62) repräsentieren.

2. Verfahren gemäß Anspruch 1, **dadurch gekennzeichnet, dass** die vorgebbare Zeitdauer in einem Bereich zwischen 1 Sekunde und 5 Minuten, insbesondere zwischen 10 Sekunden und 4 Minuten, in vorteilhafter Weise zwischen 1 und 3 Minuten liegt.

3. Verfahren gemäß Anspruch 1 und/oder 2, **dadurch gekennzeichnet, dass** die Differenz in einem Bereich zwischen 0 und 60 km/h, insbesondere zwischen 1 und 15 km/h, in vorteilhafter Weise zwischen 4 und 6 km/h liegt.

4. Verfahren nach einem der vorhergehenden Ansprüche 1 bis 3, **dadurch gekennzeichnet, dass** die Werte, die die Soll-Geschwindigkeit (62, 64) repräsentierenden Werte ersetzt haben, bei denselben Geschwindigkeitsbegrenzungen (62) für einen Fahrzyklus gelten.

5. Verfahren nach einem der vorhergehenden Ansprüche 1 bis 4, **dadurch gekennzeichnet, dass** das Fahrzeug eine Fahrererkennung aufweist und die Werte, die die Soll-Geschwindigkeit (62, 64) repräsentierenden Werte ersetzt haben, bei denselben Geschwindigkeitsbegrenzungen (62) für diesen Fahrer gelten.

6. Vorrichtung zur Geschwindigkeitsregelung eines Kraftfahrzeuges mit einem Geschwindigkeitsregler (10), mittels dessen eine Soll-Geschwindigkeit (60, 62) für das Kraftfahrzeug einstellbar ist, mit einem Bedienfeld (30), mittels dessen die Soll-Geschwindigkeit (60) für den Geschwindigkeitsregler (10) vorgebbar ist, einer Bestimmungseinrichtung (26, 28), mittels der eine Geschwindigkeitsbegrenzung (62) feststellbar ist und mit einem Raddrehzahlsensor (22) zur Erfassung von Werten, die eine Ist-Geschwindigkeit (62) repräsentieren, wobei in einem Speicher (16) des Reglers (10) die Soll-Geschwindigkeit (60, 62) repräsentierenden Werte, die Geschwindigkeitsbegrenzung (62) repräsentierenden Werte und die die Ist-Geschwindigkeit (62, 64, 66) repräsentierenden Werte abspeicherbar sind und mittels des Geschwindigkeitsreglers (10) die Soll-Geschwindigkeit (60) an die Geschwindigkeitsbegrenzung (62) anpassbar ist, **dadurch gekennzeichnet, dass** bei aktiviertem Geschwindigkeitsregler (10) und einer Soll-Geschwindigkeit (62), die einer Geschwindigkeitsbegrenzung (62) entspricht, während einer vorgebbaren Zeitdauer mehrere aufeinander folgende Werte erfassbar sind, die eine Ist-Geschwindigkeit (66) repräsentieren, dass die die Ist-Geschwindigkeit (66) repräsentierenden Werte und die die Soll-Geschwindigkeit (62) repräsentierenden Werte in dem Geschwindigkeitsregler (10) miteinander vergleichbar sind und in dem Speicher (16) die die Soll-Geschwindigkeit (62) repräsentierenden Werte durch Werte, die eine Geschwindigkeit oberhalb der Soll-Geschwindigkeit (62) repräsentieren, dann ersetzbar sind, wenn die die Ist-Geschwindigkeit (66) repräsentierenden Werte um eine vorgebbare Differenz größer als die die Soll-Geschwindigkeit (62) repräsentierenden Werte sind.

7. Verfahren zur Geschwindigkeitsregelung eines Kraftfahrzeugs mit einem Geschwindigkeitsregler (10) und mit einem Raddrehzahlsensor (22) zur Erfassung von Werten, die eine Ist-Geschwindigkeit (62) repräsentieren, mit denen in dem Geschwindigkeitsregler (10) eine Ist-Beschleunigung ermittelbar ist, wobei in einem Speicher (16) des Geschwindigkeitsreglers (10) eine Beschleunigungsbegrenzung repräsentierende Werte und die die Ist-Beschleunigung repräsentierenden Werte abspeicherbar sind, mit folgenden Schritten:
- bei aktiviertem Geschwindigkeitsregler (10) und einer Beschleunigungsbegrenzung werden während einer vorgebbaren Zeitdauer mehrere aufeinander folgende Werte erfasst, die eine Ist-Geschwindigkeit repräsentieren und daraus werden Werte ermittelt, die eine Ist-Beschleunigung repräsentieren,
- die die Ist-Beschleunigung repräsentierende Werte und die die Beschleunigungsbegrenzung repräsentierenden Werte werden verglichen,
- sind die die Ist-Beschleunigung repräsentierenden Werte um eine vorgebbare Differenz größer als die die Beschleunigungsbegrenzung repräsentierenden Werte, so werden die die Beschleunigungsbegrenzung repräsentierenden Werte durch Werte ersetzt, die eine Beschleunigung oberhalb der Beschleunigungsbegrenzung repräsentieren.

8. Verfahren gemäß Anspruch 7, **dadurch gekennzeichnet, dass** die vorgebbare Zeitdauer in einem Bereich zwischen 1 Sekunde und 5 Minuten, insbesondere zwischen 10 Sekunden und 4 Minuten, in vorteilhafter Weise zwischen 1 und 3 Minuten liegt.

9. Verfahren gemäß Anspruch 7 und/oder 8, **dadurch gekennzeichnet, dass** die Differenz in einem Bereich zwischen 0 und 5 m/sec², insbesondere zwischen ½ und 2 m/sec², in vorteilhafter Weise zwischen 0,8 und 1,2 m/sec² liegt.

10. Verfahren nach einem der vorhergehenden Ansprüche 7 bis 9, **dadurch gekennzeichnet, dass** die Werte, die die Beschleunigungsbegrenzung repräsentierenden Werte ersetzt haben, für einen Fahrzyklus gelten.

11. Verfahren nach einem der vorhergehenden Ansprüche 7 bis 10, **dadurch gekennzeichnet, dass** das Fahrzeug eine Fahrererkennung aufweist und die Werte, die die Beschleunigungsbegrenzung repräsentierenden Werte ersetzt haben, für diesen Fahrer gelten.

12. Vorrichtung zur Geschwindigkeitsregelung eines Kraftfahrzeugs mit einem Geschwindigkeitsregler (10) und mit einem Raddrehzahlsensor (22) zur Erfassung von Werten, die eine Ist-Geschwindigkeit (62) repräsentieren, mit denen in dem Geschwindigkeitsregler (10) eine Ist-Beschleunigung ermittelbar ist, wobei in einem Speicher (16) des Geschwindigkeitsreglers (10) eine Beschleunigungsbegrenzung repräsentierende Werte und die die Ist-Beschleunigung repräsentierenden Werte abspeicherbar sind, **dadurch gekennzeichnet, dass** bei aktiviertem Geschwindigkeitsregler (10) und einer Beschleunigungsbegrenzung während einer vorgebbaren Zeitdauer mehrere aufeinander folgende Werte erfassbar sind, die eine Ist-Geschwindigkeit repräsentieren und daraus in dem Geschwindigkeitsregler (10) Werte ermittelbar sind, die eine Ist-Beschleunigung repräsentieren, dass die die Ist-Beschleunigung repräsentierende Werte und die die Beschleunigungsbegrenzung repräsentierenden Werte in dem Geschwindigkeitsregler (10) vergleichbar sind, und dass in dem Speicher (16) die die Beschleunigungsbegrenzung repräsentierenden Werte durch Werte, die eine Beschleunigung oberhalb der Beschleunigungsbegrenzung repräsentieren, dann ersetzbar sind, wenn die die Ist-Beschleunigung repräsentierenden Werte um eine vorgebbare Differenz größer als die die Beschleunigungsbegrenzung repräsentierenden Werte sind.

## Claims

1. Speed control method for a motor vehicle having a cruise controller (10) by means of which a set point speed (60, 62) for the motor vehicle can be set, having an operator control panel (30) by means of which the set point speed (60) for the cruise controller (10) can be predefined, a determining device (26, 28) by means of which a speed limitation (62) can be detected, and having a wheel speed sensor (22) for sensing values which represent an actual speed (62, 64, 66), wherein values representing the set point speed (60, 62), values representing the speed limitation (62) and the values representing the actual speed (62, 64, 66) can be stored in a memory (16) of the cruise controller (10) and the set point speed (60) can be adapted to the speed limitation (62) by means of the controller (10), having the following method steps:
- when the cruise controller (10) is activated and there is a set point speed (62) which corresponds to a speed limitation (62), a plurality of successive values which represent an actual speed (66) are acquired during a predefinable time period,
- the values representing the actual speed (66) and the values representing the set point speed (62) are compared with one another,
- if the values representing the actual speed (66) are higher, by a predefinable difference, than the values representing the set point speed (62), the values representing the set point speed (62) are replaced by values which represent a speed above the set point speed (62).

2. Method according to Claim 1, **characterized in that** the predefinable time period is in a range between 1 second and 5 minutes, in particular between 10 seconds and 4 minutes, advantageously between 1 and 3 minutes.

3. Method according to Claim 1 and/or 2, **characterized in that** the difference is in a range between 0 and 60 km/h, in particular between 1 and 15 km/h, advantageously between 4 and 6 km/h.

4. Method according to one of the preceding Claims 1 to 3, **characterized in that** the values which have replaced the values representing the set point speed (62, 64) apply for the same speed limitations (62) for one driving cycle.

5. Method according to one of the preceding Claims 1 to 4, **characterized in that** the vehicle has a driver recognition means, and the values which have replaced the values representing the set point speed (62, 64) apply for this driver for the same speed limitations (62).

6. Speed control device for a motor vehicle having a cruise controller (10) by means of which a set point speed (60, 62) for the motor vehicle can be set, having an operator control panel (30) by means of which the set point speed (60) for the cruise controller (10) can be predefined, a determining device (26, 28) by means of which a speed limitation (62) can be detected, and having a wheel speed sensor (22) for sensing values which represent an actual speed (62), wherein values representing the set point speed (60, 62), values representing the speed limitation (62) and the values representing the actual speed (62, 64, 66) can be stored in a memory (16) of the controller (10) and the set point speed (60) can be adapted to the speed limitation (62) by means of the cruise controller (10), **characterized in that** when the cruise controller (10) is activated and there is a set point speed (62) which corresponds to a speed limitation (62), a plurality of successive values which represent an actual speed (66) may be acquired during a predefinable time period, **in that** the values representing the actual speed (66) and the values representing the set point speed (62) can be compared with one another in the cruise controller (10), and the values representing the set point speed (62) can be replaced in the memory (16) by values which represent a speed above the set point speed (62) if the values representing the actual speed (66) are higher, by a predefinable difference, than the values representing the set point speed (62).

7. Speed control method for a motor vehicle having a cruise controller (10) and having a wheel speed sensor (22) for acquiring values which represent an actual speed (62) with which an actual acceleration can be determined in the speed controller (10), wherein values representing an acceleration limitation and the values representing the actual acceleration can be stored in a memory (16) of the cruise controller (10), having the following steps:
- when the cruise controller (10) is activated and there is an acceleration limitation a plurality of successive values which represent an actual speed are acquired during a predefinable time period and values which represent an actual acceleration are determined therefrom,
- the values representing the actual acceleration and the values representing the acceleration limitation are compared,
- if the values representing the actual acceleration are higher, by a predefinable difference, than the values representing the acceleration limitation, the values representing the acceleration limitation are replaced by values which represent an acceleration above the acceleration limitation.

8. Method according to Claim 7, **characterized in that** the predefinable time period is in a range between 1 second and 5 minutes, in particular between 10 seconds and 4 minutes, advantageously between 1 and 3 minutes.

9. Method according to Claim 7 and/or 8, **characterized in that** the difference is in a range between 0 and 5 m/sec², in particular between ½ and 2 m/sec², advantageously between 0.8 and 1.2 m/sec².

10. Method according to one of the preceding Claims 7 to 9, **characterized in that** the values which have replaced the values representing the acceleration limitation apply for one driving cycle.

11. Method according to one of the preceding Claims 7 to 10, **characterized in that** the vehicle has a driver recognition means, and the values which have replaced the values representing the acceleration limitation apply for this driver.

12. Speed control device for a motor vehicle having a cruise controller (10) and having a wheel speed sensor (22) for acquiring values which represent an actual speed (62) with which an actual acceleration can be determined in the cruise controller (10), wherein values representing an acceleration limitation and the values representing the actual acceleration can be stored in a memory (16) of the cruise controller (10), **characterized in that** when the cruise controller (10) is activated and there is an acceleration limitation a plurality of successive values which represent an actual speed can be acquired during a predefinable time period and values which represent an actual acceleration can be determined therefrom in the cruise controller (10), **in that** the values representing the actual acceleration and the values representing the acceleration limitation can be compared in the cruise controller (10), and **in that** the values representing the acceleration limitation can be replaced in the memory (16) by values which represent an acceleration above the acceleration limitation if the values representing the actual acceleration are higher, by a predefinable difference, than the values representing the acceleration limitation.

## Revendications

1. Procédé de régulation de la vitesse d'un véhicule automobile comportant un régulateur de vitesse (10) à l'aide duquel on règle une vitesse de consigne (60, 62) pour le véhicule, un champ de service (30 à l'aide duquel on prédéfinit la vitesse de consigne (60) pour le régulateur de vitesse (10), une installation de détermination (26 , 28) à l'aide de laquelle on fixe une limitation de vitesse (62) ainsi qu'un capteur de vitesse de rotation de roue (22) pour saisir des valeurs représentant une vitesse réelle (62, 64, 66),
une mémoire (16) du régulateur de vitesse (10) recevant des valeurs représentant la vitesse de consigne (60, 62), les valeurs représentant la limitation de vitesse (62) et les valeurs représentant la vitesse réelle (62, 64, 66) et à l'aide du régulateur (10) on adapte la vitesse de consigne (60) à la limitation de vitesse (62) selon les étapes de procédé suivantes :
- on active le régulateur de vitesse (10) et pour une vitesse de consigne (62) qui correspond à la limitation de vitesse (62), au cours d'une durée prédéfinie, on saisit plusieurs valeurs successives qui représentent une vitesse réelle (66),
- on compare entre elles les valeurs représentant la vitesse réelle (66) et la vitesse de consigne (62),
- si des valeurs représentant la vitesse réelle (66) dépassent d'une différence prédéfinie, supérieure aux valeurs représentant la vitesse de consigne (62), on remplace les valeurs représentant la vitesse de consigne (62) par des valeurs représentant une vitesse supérieure à la vitesse de consigne (62).

2. Procédé selon la revendication 1,
**caractérisé en ce que**
la durée prédéfinie se situe dans une plage comprise entre 1 seconde et 5 minutes, notamment entre 10 secondes et 4 minutes et de façon préférentielle entre 1 et 3 minutes.

3. Procédé selon la revendication 1 et/ou 2,
**caractérisé en ce que**
la différence se situe dans une plage comprise entre 0 et 60 km/h, notamment entre 1 et 15 km/h et de façon préférentielle entre 4 et 6 km/h.

4. Procédé selon l'une des revendications précédentes 1 à 3,
**caractérisé en ce que**
les valeurs qui ont remplacé les valeurs représentant la vitesse de consigne (62, 64) s'appliquent pour un cycle de conduite avec les mêmes limitations de vitesse (62).

5. Procédé selon l'une des revendications précédentes 1 à 4,
**caractérisé en ce que**
le véhicule comporte une caractéristique de conducteur et les valeurs qui ont remplacé les valeurs représentant la vitesse de consigne (62, 64) s'appliquent pour les mêmes limitations de vitesse (62) pour ce conducteur.

6. Dispositif de régulation de vitesse d'un véhicule automobile comportant un régulateur de vitesse (10) à l'aide duquel on règle une vitesse de consigne (66, 62) pour le véhicule, un champ de service (30) à l'aide duquel on prédéfinit la vitesse de consigne (60) pour le régulateur de vitesse (10), une installation de détermination (26, 28) à l'aide de laquelle on fixe une limitation de vitesse (62) et un capteur de vitesse de roue (62) pour saisir une valeur représentant une vitesse réelle (62),
une mémoire (16) du régulateur (10) contenant l'enregistrement de valeurs représentant la vitesse de consigne (60, 62), des valeurs représentant la limitation de vitesse (62) et des valeurs représentant la vitesse réelle (62, 64, 66) et à l'aide du régulateur de vitesse (10) on adapte la vitesse de consigne (60) à la limitation de vitesse (62),
**caractérisé en ce que**
pour un régulateur de vitesse (10), activé, et pour une vitesse de consigne (62) qui correspond à une limitation de vitesse (62), au cours d'une durée prédéfinie on saisit plusieurs valeurs successives qui représentent une vitesse réelle (66),
on compare les valeurs représentant la vitesse réelle (66) et les valeurs représentant la vitesse de consigne (62) dans un régulateur de vitesse (10) et on remplace alors dans la mémoire (16), les valeurs représentant la vitesse de consigne (62) par des valeurs représentant une vitesse supérieure à la vitesse de consigne (62) si les valeurs représentant la vitesse réelle (66) sont supérieures d'une différence prédéfinie aux valeurs représentant la vitesse de consigne (62).

7. Procédé de régulation de vitesse d'un véhicule automobile comportant un régulateur de vitesse (10) et un capteur de vitesse de roue (22) pour saisir des valeurs représentant une vitesse réelle (62), à l'aide desquelles on détermine une accélération réelle dans le régulateur de vitesse (10),
et une mémoire (16) du régulateur de vitesse (10) dans laquelle on enregistre des valeurs représentant une limitation d'accélération et des valeurs représentant l'accélération réelle, et comprenant les étapes suivantes :
- si le régulateur de vitesse (10) est activé pour une limitation d'accélération, au cours d'une durée prédéfinie on saisit plusieurs valeurs successives qui représentent une vitesse réelle et à partir de là on détermine des valeurs représentant l'accélération réelle,
- on compare les valeurs représentant l'accélération réelle et les valeurs représentant la limitation d'accélération,
- si les valeurs représentant l'accélération réelle sont supérieures d'une différence prédéfinie par rapport aux valeurs représentant la limitation d'accélération, on remplace les valeurs représentant la limitation d'accélération par des valeurs représentant une accélération supérieure à la limitation d'accélération.

8. Procédé selon la revendication 7,
**caractérisé en ce que**
la durée prédéfinie se situe dans une plage comprise entre 1 seconde et 5 minutes, notamment entre 10 secondes et 4 minutes et de façon avantageuse, entre 1 et 3 minutes.

9. Procédé selon la revendication 7 et/ ou 8,
**caractérisé en ce que**
la différence se situe dans une plage comprise entre 0 et 5 m/sec², notamment entre 1/2 et 2 m/sec² et de façon avantageuse entre 0,8 et 1,2 m/sec².

10. Procédé selon l'une des revendications précédentes 7 à 9,
**caractérisé en ce que**
les valeurs qui ont remplacé les valeurs représentant la limitation d'accélération s'appliquent à un cycle de conduite.

11. Procédé selon l'une des revendication précédentes 7 à 10,
**caractérisé en ce que**
le véhicule a une caractéristique de conducteur et les valeurs qui ont remplacé les valeurs représentant la limitation d'accélération s'appliquent à ce conducteur.

12. Dispositif de régulation de vitesse d'un véhicule automobile comportant un régulateur de vitesse (10) et un capteur de vitesse de rotation de roue (22) pour saisir des valeurs représentant une vitesse réelle (62) à l'aide desquelles on détermine une accélération dans le régulateur de vitesse (10), et dans une mémoire (16) du régulateur de vitesse (10) on enregistre des valeurs représentant une limitation d'accélération et des valeurs représentant l'accélération réelle,
**caractérisé en ce que**
si le régulateur de vitesse (10) est activé et pour une limitation d'accélération, au cours d'une durée prédéfinie on saisit plusieurs valeurs successives qui représentent une vitesse réelle et à partir de là on détermine des valeurs dans le régulateur de vitesse (10) qui représentent une accélération réelle,
on compare les valeurs représentant l'accélération réelle et la valeurs représentant la limite d'accélération dans le régulateur de vitesse (10) et dans la mémoire (16) on remplace les valeurs représentant la limitation d'accélération par des valeurs qui représentent une accélération supérieure à la limitation d'accélération si les valeurs représentant l'accélération réelle dépassent d'une différence prédéfinie les valeurs représentant la limitation d'accélération.
